# EUROPÄISCHE PATENTSCHRIFT

(11) **EP 3 887 915 B1**
(45) Veröffentlichungstag und Bekanntmachung des Hinweises auf die Patenterteilung: **02.08.2023**
(21) Anmeldenummer: 19804692.2
(22) Anmeldetag: 12.11.2019
(51) Int. Cl.: G05D 1/02, G06T 7/73

(54) **VORRICHTUNG ZUM LOKALISIEREN EINER LANDMASCHINE BASIEREND AUF SENSORDATEN UND BILDSEGMENTIERUNG**
APPARATUS FOR LOCATING AN AGRICULTURAL MACHINE ON THE BASIS OF SENSOR DATA AND IMAGE SEGMENTATION
DISPOSITIF POUR LOCALISER UNE MACHINE AGRICOLE EN FONCTION DE DONNÉES DE DÉTECTION ET PAR SEGMENTATION D'IMAGE

(30) Priorität: 28.11.2018 DE 102018220406
(43) Veröffentlichungstag der Anmeldung: 06.10.2021
(73) Patentinhaber: ZF Friedrichshafen AG, 88046 Friedrichshafen (DE)
(72) Erfinder: CHEN, Zhihu, 88048 Friedrichshafen (DE); RIPPEL, Benjamin, 88090 Immenstaad (DE)
(74) Vertreter: ZF Friedrichshafen AG
(86) Internationale Anmeldenummer: PCT/EP2019/081004
(87) Internationale Veröffentlichungsnummer: WO 2020/108981

(56) Entgegenhaltungen:
- DE-A1- 10 328 395
- DE-A1-102011 078 290
- DAVID BALL ET AL: "Vision-based Obstacle Detection and Navigation for an Agricultural Robot : Navigation for an Agricultural Robot", JOURNAL OF FIELD ROBOTICS, Bd. 33, Nr. 8, 13. Januar 2016 (2016-01-13), Seiten 1107-1130, XP055401674, US ISSN: 1556-4959, DOI: 10.1002/rob.21644

## Beschreibung

Die vorliegende Erfindung betrifft eine Vorrichtung zum Lokalisieren einer Landmaschine nach Anspruch 1. Die Erfindung betrifft ferner die Verwendung einer solchen Vorrichtung in einer Landmaschine nach Anspruch 5.

In landwirtschaftlichen Bereichen spielt die Bearbeitung von landwirtschaftlichen Nutzflächen eine zentrale Rolle. Beispielsweise müssen bei der Ernte von Getreide, aber auch von Feldfrüchten das Erntegut in einer bestimmten Form (etwa reihenförmig) abgelegt bzw. geschwadet werden. Für solche Zwecke werden Landmaschinen eingesetzt, die entlang einer bestimmten Fahrroute auf der landwirtschaftlichen Nutzfläche fahren und gleichzeitig Letztere landwirtschaftlich bearbeiten.

Um die landwirtschaftlichen Bearbeitungsvorgänge zuverlässig durchzuführen, ist es sinnvoll, die Lage der Landmaschine laufend bestimmen zu können. Beispielsweise kann per Global Positioning System (GPS) die Lage der Landmaschine mit sehr hoher Genauigkeit ermittelt werden.

Aus dem Stand der Technik sind Lösungen bekannt, die Lage der Landmaschine während der landwirtschaftlichen Bearbeitungsvorgänge zu bestimmen. So ist aus WO 2018/087546 ein roboterbasiertes Früchteerntesystem umfassend einen autonomen Roboter bekannt.

Darüber hinaus offenbart DE 10 2011 078 290 A1 ein Verfahren und eine Vorrichtung zum Klassifizieren eines Umgebungsbereiches eines Fahrzeuges. Dabei erfolgt eine Klassifizierung einer Umgebung eines Fahrzeuges mittels einer Musterdatenbank durch einen Vergleich mit Mustern, die aus gemessenen Daten von umgebungserfassenden bildgebenden Sensoren abgeleitet werden.

Aus DE 103 28 395 A1 sind eine Landmaschine sowie ein Verfahren zu ihrer Steuerung bekannt, wobei mittels einer Positionsbestimmungseinrichtung die Ist-Position der Landmaschine relativ zu einem vorgegebenen Soll-Fahrweg bestimmt wird und Steuerbefehle für die Lenkung der Landmaschine automatisch generiert werden.

Dadurch, dass die bekannten Systeme überwiegend auf dem GPS basieren, sind solche Lösungen hinsichtlich der Lizenzgebühren zur Erlangung von Satellitendaten kostenspielig. Außerdem ist bei solchen Lösungen die Prozessierung großer Datenmenge und über weite Datenübermittlungswege häufig erforderlich. Dies ist nachteilig im Hinblick auf die Datensicherheit und auch die Datenprozessierungseffizienz.

Aufgabe der vorliegenden Erfindung ist daher, die bekannten Systeme zur Bearbeitung von landwirtschaftlichen Nutzflächen dahingehend zu verbessern, um die Landmaschine bei zumindest gleichbleibender Genauigkeit kostengünstiger zu lokalisieren.

Die Aufgabe wird gelöst durch eine Vorrichtung zum Lokalisieren einer Landmaschine mit den Merkmalen des Anspruchs 1. Ferner wird die Aufgabe gelöst durch die Verwendung einer solchen Vorrichtung in einer Landmaschine mit den Merkmalen des Anspruchs 5.

Die Vorrichtung dient zum Lokalisieren einer Landmaschine auf einer landwirtschaftlichen Nutzfläche. Die Landmaschine kann beispielsweise ein Traktor, eine Dreschmaschine, eine Schwadenmaschine, ein Siloverteiler oder eine andere Art von Landmaschinen sein.

Die Vorrichtung umfasst eine Eingabeschnittstelle zum Eingeben einer auf der Nutzfläche vordefinierten Fahrroute. Die Eingabeschnittstelle kann eine Datenschnittstelle jeglicher Art sein. Die vordefinierte Fahrroute ist auf der landwirtschaftlichen Nutzfläche vordefiniert. Die Fahrroute kann beispielsweise auf einer Landkarte gekennzeichnet sein, die das Gebiet der landwirtschaftlichen Nutzfläche einschließt. Die Landkarte kann beispielsweise eine Rasterkarte umfassen, die mehrere Rastereinheiten aufweist. Vorzugsweise kann zumindest einem Teil der mehreren Rastereinheiten zumindest ein Attribut zugewiesen sein. Das zumindest eine Attribut kann etwa Informationen betreffend die geografischen Gegebenheiten, die landwirtschaftlichen Bearbeitungsvorgänge der Flächeneinheit der Nutzfläche entsprechend der zugehörigen Rastereinheit umfassen. Beispielsweise kann es sich um Informationen betreffend bereite erfolgte und/oder noch vorzunehmende landwirtschaftliche Bearbeitungsvorgänge bzw. -schritte hiervon handeln.

Die Eingabeschnittstelle dient außerdem zum Eingeben von Bilddaten betreffend einen von einem Sensor erfassten, in einem Nahbereich der Landmaschine befindlichen Überwachungsbereich der Nutzfläche. Der Sensor kann eine Kamera, etwa eine Stereokamera, ein Radarsensor, ein Lidarsensor und/oder ein Ultraschallsensor sein. Der von den Bilddaten des Sensors umfassten Überwachungsbereich kann beispielsweise einen Kreis oder Teilkreis mit einem vom Sensor aus festgelegten Radius, oder alternativ eine andere Form aufweisen. Insbesondere umfasst der Überwachungsbereich den Bereich eines Feldwinkels (Englisch: Field of View, FOV) des Sensors.

Die Lokalisierungsvorrichtung umfasst ferner eine Auswerteeinheit zum Detektieren einer Lage des Überwachungsbereichs in Bezug auf die vordefinierte Fahrroute. Konkret detektiert die Auswerteeinheit, in welchem Abschnitt sich der vom Sensor zu einem gegebenen Zeitpunkt erfasste Überwachungsbereich innerhalb der vordefinierten Fahrroute befindet. Dazu teilt die Auswerteeinheit die gesamte vordefinierte Fahrroute in mehrere Abschnitte, wobei die Länge der Abschnitte gleich oder unterschiedlich sein können. Ferner kann die Länge variierbar sein. Die Auswerteeinheit kann dann einen Vergleich zwischen dem Überwachungsbereich mit jedem der mehreren Abschnitte vornehmen. Basierend auf dem Vergleich kann die Auswerteeinheit denjenigen Abschnitt herausfinden, der dem Überwachungsbereich am wahrscheinlichsten entspricht und diesem zuzuordnen ist. Auf diese Weise wird die Lage des Überwachungsbereichs auf der vordefinierten Fahrroute detektiert und somit die Landmaschine lokalisiert.

Die Lokalisierungsvorrichtung umfasst ferner eine Ausgabeschnittstelle zum Ausgeben der detektierten Lage. Die Ausgabeschnittstelle kann eine beliebige Kommunikationsschnittstelle sein. Insbesondere kann es sich hierbei um eine Kommunikationsschnittstelle für drahtlose Kommunikation, etwa Bluetooth, Infrarot, WLAN, handeln. Gegenüber den aus dem Stand der Technik bekannten Vorrichtungen ist die erfindungsgemäße Vorrichtung in der Lage, rein basierend auf vom Sensor erzeugten Daten, insbesondere Kamerabildern, die Landmaschine zu lokalisieren. Hierdurch können die Nachteile einer auf GPS basierenden Lokalisierung hinsichtlich Kosten und Datenübermittlungs- sowie Datenverarbeitungseffizienz vorteilhafterweise reduziert oder gar vermieden werden. Die landwirtschaftlichen Bearbeitungen von Nutzflächen können daher mit erhöhter Kosten- und Zeiteffizienz durchgeführt werden.

Vorteilhafte Ausgestaltungen und Weiterbildungen sind in den Unteransprüchen angegeben.

Erfindungsgemäß ist die Auswerteeinheit dazu ausgebildet, einen Korrelationswert zwischen dem jeweiligen der Mehrzahl von Abschnitten der vordefinierten Fahrroute und dem Überwachungsbereich zu ermitteln.

Der Korrelationswert ist ein Maß dafür, inwieweit sich zwei verschiedene Objekte einander in einer bestimmten Korrelation stehen. Insbesondere gibt der Korrelationswert an, inwieweit der Überwachungsbereich dem jeweiligen Abschnitt der vordefinierten Fahrroute entspricht. Dies erhöht die Genauigkeit und Zuverlässigkeit der Lokalisierung.

Gemäß einer weiteren bevorzugten Ausgestaltung ist die Auswerteeinheit dazu ausgebildet, den Abschnitt mit einem maximalen Korrelationswert aus der Mehrzahl von Abschnitten zu bestimmen.

Auf diese Weise wird derjenige Abschnitt der vordefinierten Fahrroute identifiziert, der dem Überwachungsbereich des Sensors am meisten entspricht. Die Landmaschine kann daher basierend auf der hierdurch gefundenen, auf die vordefinierte Fahrroute bezogenen Lage lokalisiert werden.

Weiter erfindungsgemäß ist die Auswerteeinheit dazu ausgebildet, den Überwachungsbereich mittels Segmentierung in den Bilddaten zu erkennen.

Die Segmentierung ist vorzugsweise eine semantische Segmentierung. Die Bilddaten können hierdurch mit erhöhter Genauigkeit und Zuverlässigkeit analysiert werden, um Objekte, die in den Bilddaten vorkommen, zu klassifizieren. Dies verbessert die Lokalisierung der Landmaschine.

Erfindungsgemäß umfasst die Lokalisierungsvorrichtung ferner eine Kalibrierungseinheit zur Kalibrierung des Sensors basierend auf der detektierten Lage der Landmaschine.

Die Objekte, die in den vom Sensor erzeugten Bilddaten vorkommen, sind in den Sensorbildern basierend auf einem Bildkoordinatensystem gezeigt. Um ein Entsprechungsverhältnis zwischen dem Bildkoordinatensystem und einem Weltkoordinatensystem zu bestimmen, werden Weltkoordinaten der vom Sensor erfassten Objekte verwendet. Dabei hängt das Entsprechungsverhältnis zwischen dem Bildkoordinatensystem und dem Weltkoordinatensystem von der Lage des Sensors, und, wenn der Sensor an der Landmaschine angebracht ist, von der Lage der Landmaschine ab. Durch Verwendung der detektierten Lage der Landmaschine kann deshalb das Entsprechungsverhältnis vereinfacht bestimmt werden.

Gemäß einer weiteren bevorzugten Ausgestaltung umfasst die Lokalisierungsvorrichtung ferner eine Aufgabenzuweisungseinheit zur Zuweisung einer landwirtschaftlichen Aufgabe zum Überwachungsbereich basierend auf der detektierten Lage der Landmaschine.

Das zumindest eine Attribut, welches einer der Rastereinheiten der Landkarte zugeordnet ist, enthält beispielsweise eine oder mehrere Aufgaben, die auf der Flächeneinheit, die dieser Rastereinheit entspricht, bereits durchgeführt und/oder durchzuführen. Die Aufgabenplanung kann hierdurch mit erhöhter Effizienz und Genauigkeit vorgenommen werden. Die Aufgaben können "Gras mähen", "Gras schwaden", "Getreide sammeln" und/oder "Früchte pflücken" umfassen.

Gemäß einer weiteren bevorzugten Ausgestaltung umfasst die Lokalisierungsvorrichtung ferner eine Optimierungseinheit zur Optimierung der lateralen Position der Landmaschine basierend auf der detektierten Lage der Landmaschine.

Die detektierte Lage der Landmaschine ist die longitudinale Position/Lage der Landmaschine. Es kann jedoch passieren, dass die Landmaschine während ihrer Fortbewegung auf der Nutzfläche entlang der vordefinierten Fahrroute einen lateralen Versatz erfährt. Um diesem lateralen Versatz entgegenzuwirken, ist es hilfreich, basierend auf der detektierten longitudinalen Lage der Landmaschine eine Soll-Position in der lateralen Richtung zu bestimmen. Die Soll-Position kann für jeden Punkt entlang der Fahrroute und bezogen auf einen Punkt der Landmaschine, etwa ihren Schwerpunkt oder geometrischen Mittelpunkt, vordefiniert sein. Dies ermöglicht ein verbessertes Ausführen der Fahrroute, sodass die landwirtschaftlichen Bearbeitungsvorgänge besser durchzuführen sind.

Ein Computerprogrammprodukt ist ausgeführt, in einen Speicher eines Computers geladen zu werden und umfasst Softwarecodeabschnitte, mit denen die Verfahrensschritte des Verfahrens zur Routenplanung für eine Landmaschine ausgeführt werden, wenn das Computerprogrammprodukt auf dem Computer läuft.

Ein Programm gehört zur Software eines Daten verarbeitenden Systems, zum Beispiel einer Auswerteeinrichtung oder einem Computer. Software ist ein Sammelbegriff für Programme und zugehörigen Daten. Das Komplement zu Software ist Hardware. Hardware bezeichnet die mechanische und elektronische Ausrichtung eines Daten verarbeitenden Systems. Ein Computer ist eine Auswerteeinrichtung.

Computerprogrammprodukte umfassen in der Regel eine Folge von Befehlen, durch die die Hardware bei geladenem Programm veranlasst wird, ein bestimmtes Verfahren durchzuführen, das zu einem bestimmten Ergebnis führt. Wenn das betreffende Programm auf einem Computer zum Einsatz kommt, ruft das Computerprogrammprodukt einen technischen Effekt hervor, nämlich die bekannten Systeme zur Bearbeitung von landwirtschaftlichen Nutzflächen dahingehend zu verbessern, um die Landmaschine bei zumindest gleichbleibender Genauigkeit kostengünstiger zu lokalisieren.

Das Computerprogrammprodukt ist Plattform unabhängig. Das heißt, es kann auf jeder beliebigen Rechenplattform ausgeführt werden. Bevorzugt wird das Computerprogrammprodukt auf einer erfindungsgemäßen Vorrichtung zur Routenplanung für eine Landmaschine ausgeführt.

Die Softwarecodeabschnitte sind in einer beliebigen Programmiersprache geschrieben, zum Beispiel in Python.

Die Erfindung wird in den Figuren beispielhaft erläutert. Es zeigen:
- Fig. 1: eine schematische Darstellung einer erfindungsgemäßen Vorrichtung zur Lokalisierung einer Landmaschine gemäß einem Ausführungsbeispiel;
- Fig. 2: eine schematische Darstellung eines Verfahrens zur Lokalisierung einer Landmaschine gemäß einem Ausführungsbeispiel; und
- Fig. 3: eine schematische Darstellung einer Fahrroute und der zu lokalisierenden Landmaschine auf der Fahrroute.

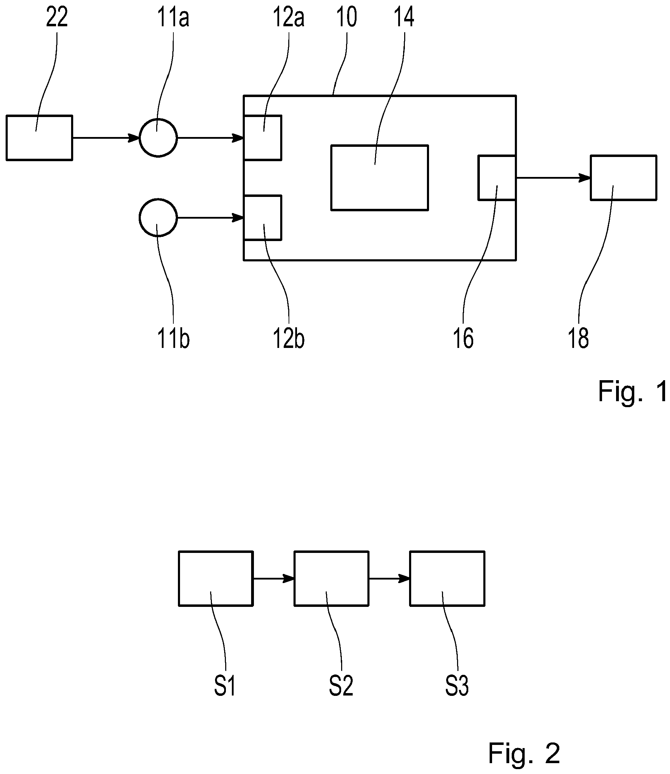

Fig.1 zeigt eine schematische Darstellung einer erfindungsgemäßen Vorrichtung 10 zur Lokalisierung einer Landmaschine 50 gemäß einem Ausführungsbeispiel.

Die Vorrichtung 10 umfasst eine Eingabeschnittstelle 12a zum Eingeben von Bilddaten 11a, die von einem Sensor 22 erzeugt worden sind. Die Bilddaten 11a betreffen einen Nahbereich einer Landmaschine 50 (in Fig. 1 nicht gezeigt) auf einer zu bearbeitenden landwirtschaftlichen Nutzfläche 60 (in Fig. 1 nicht gezeigt). Der Nahbereich wird als Überwachungsbereich vom Sensor 22 erfasst. Eine weitere Eingabeschnittstelle 12b dient zum Eingeben einer vordefinierten Fahrroute 11b der landwirtschaftlichen Nutzfläche 60. Die vordefinierte Fahrroute 11b ist vorzugsweise auf einer Landkarte definiert, die weiter vorzugsweise eine Rasterkarte mit mehreren Rastereinheiten umfasst. Jeder der Rastereinheiten ist weiter vorzugsweise zumindest ein Attribut zugeordnet sind. Die Attribute können Informationen wie Gegebenheiten des der zugehörigen Rastereinheit entsprechenden Teils der Nutzfläche hinsichtlich der geografischen Beschaffenheit, der Nutzungssituation, insbesondere die Pflanzenbezeichnung, die Bezeichnung und/oder Menge der verwendeten chemischen/biologischen Stoffe, die Zusammensetzung der Erde der jeweiligen Rastereinheiten der Nutzfläche betreffen. Die Attribute können alternativ oder zusätzlich einen oder mehrere landwirtschaftliche Bearbeitungsschritte betreffen.

Die Vorrichtung 10 umfasst ferner eine Auswerteeinheit 14 zum Auswerten der Bilddaten 11a und der vordefinierten Fahrroute 11b, um die Lage der Landmaschine 50 bezogen auf die Fahrroute 11b zu detektieren. Die Auswerteeinheit 14 ist vorzugsweise dazu ausgebildet, den Überwachungsbereich aus den Bilddaten 11a zu entnehmen und diesen mit einer Mehrzahl von Abschnitten der vordefinierten Fahrroute 11b zu vergleichen. Insbesondere kann die Auswerteeinheit 14 hierbei einen Korrelationswert zwischen dem Überwachungsbereich des Sensors und dem jeweiligen Abschnitt der vordefinierten Fahrroute 11b bestimmen. Basierend auf den hierdurch ermittelten Korrelationswerten kann die Auswerteeinheit 14 denjenigen Abschnitt der vordefinierten Fahrroute 11b mit dem maximalen Korrelationswert identifizieren. Auf diese Weise wird die Lage der Landmaschine 50 bezogen auf die vordefinierte Fahrroute 11b bestimmt. Die Vorrichtung 10 umfasst ferner eine Ausgabeschnittstelle 16 zum Ausgeben der wie oben beschrieben bestimmten Lage der Landmaschine 50 an eine Aufgabenzuweisungseinheit, eine Optimierungseinheit und/oder eine weitere Einheit.

Fig. 2 zeigt eine schematische Darstellung eines Verfahrens zur Lokalisierung einer Landmaschine 50 gemäß einem Ausführungsbeispiel.

Das Verfahren umfasst einen ersten Schritt, in dem die auf der Nutzfläche 60 vordefinierte Fahrroute 11a und die Bilddaten 11b betreffend den vom Sensor 22 erfassten, im Nahbereich der Landmaschine 50 befindlichen Überwachungsbereiches der Nutzfläche 60 eingegeben werden. Das Verfahren umfasst außerdem einen zweiten Schritt, in dem die Lage des Überwachungsbereichs in Bezug auf die vordefinierte Fahrroute 11a detektiert wird. Das Verfahren umfasst ferner einen dritten Schritt, in dem die detektierte Lage ausgegeben wird.

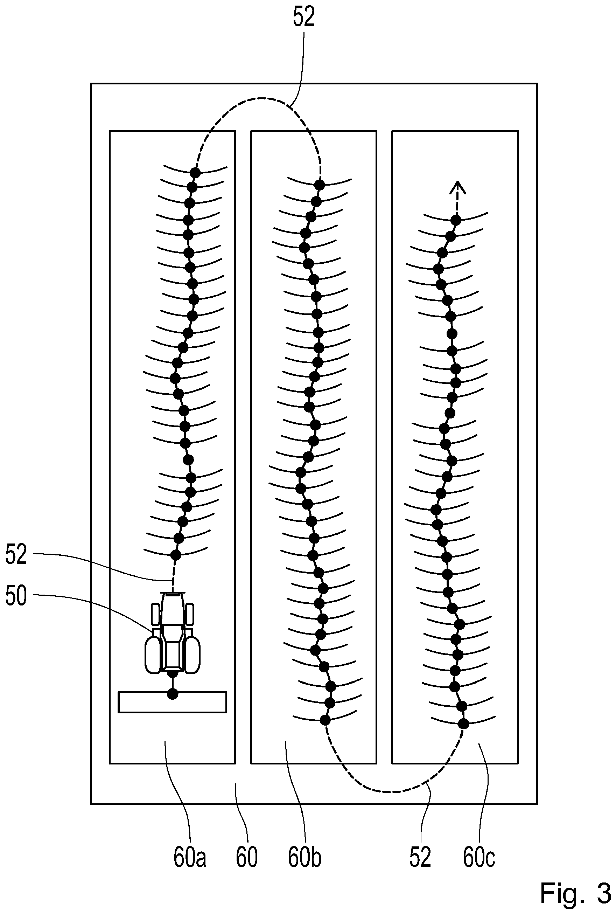

Fig. 3 zeigt eine schematische Darstellung einer Fahrroute 52 und der zu lokalisierenden Landmaschine 50 auf der Fahrroute 52.

Die zu lokalisierende Landmaschine 50 ist in diesem Beispiel als Schade-Maschine gezeigt. Die vordefinierte Fahrroute 52 erstreckt sich über mehrere bepflanzte Bereiche 60a, 60b, 60c der landwirtschaftlichen Nutzfläche 60, zwischen denen unbepflanzte Trennbereiche angeordnet sind. Eine Optimierungseinheit der erfindungsgemäßen Vorrichtung 10 oder alternativ eine externe Optimierungseinheit kann einen Versatz zwischen dem Mittelpunkt der Landmaschine 50 und der vordefinierten Fahrroute 10 detektieren. In Fig. 3 sind die Soll-Positionen des Mittelpunktes der Landmaschine 50 entlang der vordefinierten Fahrroute 52 veranschaulicht. Mittels eines Regelkreises kann dafür gesorgt werden, dass sich der Mittelpunkt der Landmaschine 50 stets mit der jeweiligen Soll-Position zusammenfällt. Auf diese Weise kann die laterale Positionierungsgenauigkeit der Landmaschine 50 erhöht werden.

### Bezugszeichen

- 10: Lokalisierungsvorrichtung
- 12a, 12b: Eingabeschnittstelle
- 14: Auswerteeinheit
- 16: Ausgabeschnittstelle
- 18: externe Einheit
- 22: Sensor
- 50: Landmaschine
- 11b, 52: Fahrroute
- 60: Nutzfläche
- 60a, 60b, 60c: bepflanzte Bereiche der Nutzfläche
- S1 bis S3: Verfahrensschritte

## Patentansprüche

1. Vorrichtung (10) zum Lokalisieren einer Landmaschine (50) auf einer landwirtschaftlichen Nutzfläche (60), umfassend:
- eine Eingabeschnittstelle (12) zum Eingeben einer auf der Nutzfläche (60) vordefinierten Fahrroute (11a) und zum Eingeben von Bilddaten (11b) betreffend einen von einem Sensor (22) erfassten, in einem Nahbereich der Landmaschine (50) befindlichen Überwachungsbereich () der Nutzfläche (60);
- eine Auswerteeinheit (14) zum Detektieren einer Lage des Überwachungsbereichs () in Bezug auf die vordefinierte Fahrroute (11a); und
- eine Ausgabeschnittstelle (16) zum Ausgeben der detektierten Lage;
- wobei die Auswerteeinheit (14) dazu ausgebildet ist, den Überwachungsbereich () aus den Bilddaten (11b) zu entnehmen und mit einer Mehrzahl von Abschnitten der vordefinierten Fahrroute (11a) zu vergleichen;
- wobei die Auswerteeinheit (14) dazu ausgebildet ist, einen Korrelationswert zwischen dem jeweiligen der Mehrzahl von Abschnitten der vordefinierten Fahrroute (11a) und dem Überwachungsbereich zu ermitteln;
- wobei die Auswerteeinheit (14) dazu ausgebildet ist, den Abschnitt mit einem maximalen Korrelationswert aus der Mehrzahl von Abschnitten zu bestimmen, **dadurch gekennzeichnet, dass** die Auswerteeinheit (14) dazu ausgebildet ist, den Überwachungsbereich mittels Segmentierung in den Bilddaten (11b) zu erkennen, wobei die Vorrichtung (10) weiter eine Kalibrierungseinheit zur Kalibrierung des Sensors (22) basierend auf der detektierten Lage aufweist.

2. Vorrichtung (10) nach Anspruch 1, wobei der Sensor (22) eine Kamera, ein Radarsensor, ein Light Detection Ranging Sensor und/oder ein Ultraschallsensor ist.

3. Vorrichtung (10) nach einem der Ansprüche 1 bis 2, weiter umfassend eine Aufgabenzuweisungseinheit zur Zuweisung einer landwirtschaftlichen Aufgabe zum Überwachungsbereich () basierend auf der detektierten Lage.

4. Vorrichtung (10) nach einem der Ansprüche 1 bis 3, weiter umfassend eine Optimierungseinheit zur Optimierung der lateralen Position der Landmaschine (50) basierend auf der detektierten Lage.

5. Verwendung einer Vorrichtung (10) nach einem der Ansprüche 1 bis 4 in einer Landmaschine (50).

## Claims

1. Apparatus (10) for locating an agricultural machine (50) on agricultural land (60), comprising:
- an input interface (12) for inputting a route of travel (11a) predefined on the land (60) and for inputting image data (11b) relating to a monitored area () of the land (60) that is covered by a sensor (22) and situated in a vicinity of the agricultural machine (50) ;
- an evaluation unit (14) for detecting a location of the monitored area () in relation to the predefined route of travel (11a); and
- an output interface (16) for outputting the detected location;
- wherein the evaluation unit (14) is designed to take the monitored area () from the image data (11b) and to compare it with a plurality of sections of the predefined route of travel (11a);
- wherein the evaluation unit (14) is designed to determine a correlation value between the respective one of the plurality of sections of the predefined route of travel (11a) and the monitored area;
- wherein the evaluation unit (14) is designed to ascertain the section having a maximum correlation value from the plurality of sections,
**characterized in that** the evaluation unit (14) is designed to identify the monitored area by means of segmentation in the image data (11b), the apparatus (10) further having a calibration unit for calibrating the sensor (22) on the basis of the detected location.

2. Apparatus (10) according to Claim 1, wherein the sensor (22) is a camera, a radar sensor, a light detection and ranging sensor and/or an ultrasonic sensor.

3. Apparatus (10) according to either of Claims 1 and 2, further comprising a task assignment unit for assigning an agricultural task to the monitored area () on the basis of the detected location.

4. Apparatus (10) according to one of Claims 1 to 3, further comprising an optimization unit for optimizing the lateral position of the agricultural machine (50) on the basis of the detected location.

5. Use of an apparatus (10) according to one of Claims 1 to 4 in an agricultural machine (50).

## Revendications

1. Dispositif (10) de localisation d'une machine agricole (50) sur une surface agricole utile (60), ledit dispositif comprenant :
- une interface d'entrée (12) destinée à entrer un itinéraire de conduite (11a) prédéfini sur la surface utile (60) et entrer des données d'image (11b) relatives à une zone de surveillance () de la surface utile (60) qui a été détectée par un capteur (22) et qui est située à proximité de la machine agricole (50) ;
- une unité d'évaluation (14) destinée à détecter une position de la zone de surveillance () par rapport à l'itinéraire de conduite prédéfini (11a) ; et
- une interface de sortie (16) destinée à délivrer la position détectée ;
- l'unité d'évaluation (14) étant conçue pour supprimer la zone de surveillance () des données d'image (11b) et pour la comparer à une pluralité de portions de l'itinéraire de conduite prédéfini (11a) ;
- l'unité d'évaluation (14) étant conçue pour déterminer une valeur de corrélation entre la portion respective de la pluralité de portions de l'itinéraire de conduite prédéfini (11a) et la zone de surveillance ;
- l'unité d'évaluation (14) étant conçue pour déterminer parmi la pluralité de portions la portion qui a une valeur de corrélation maximale,
**caractérisé en ce que** l'unité d'évaluation (14) est conçue pour identifier la zone de surveillance par segmentation dans les données d'image (11b), le dispositif (10) comportant en outre une unité d'étalonnage destinée à étalonner le capteur (22) sur la base de la position détectée.

2. Dispositif (10) selon la revendication 1, le capteur (22) étant une caméra, un capteur radar, un télémètre à détection de lumière et/ou un capteur à ultrasons.

3. Dispositif (10) selon l'une des revendications 1 à 2, comprenant en outre une unité d'attribution de tâche destinée à attribuer une tâche agricole à la zone de surveillance () sur la base de la position détectée.

4. Dispositif (10) selon l'une des revendications 1 à 3, comprenant en outre une unité d'optimisation destinée à optimiser la position latérale de la machine agricole (50) sur la base de la position détectée.

5. Utilisation d'un dispositif (10) selon l'une des revendications 1 à 4 dans une machine agricole (50).
